# EUROPEAN PATENT APPLICATION

(11) **EP 4 717 462 A1**
(43) Date of publication of application: **01.04.2026**
(21) Application number: 25203581.1
(22) Date of filing: 22.09.2025
(51) Int. Cl.: B41J 2/16

(54) **INK-REPELLENT MEMBER, METHOD OF PRODUCING INK-REPELLENT MEMBER, INK JET HEAD, AND METHOD OF PRODUCING ARTICLE**

(30) Priority: 25.09.2024 JP 2024166423; 03.09.2025 JP 2025146311
(71) Applicant: Canon Kabushiki Kaisha, Tokyo, 146-8501 (JP)
(72) Inventor: MIYAUCHI, Yohei, Tokyo (JP); MIMURA, Tadahiro, Tokyo (JP); ISHIKURA, Junri, Tokyo (JP); SASAKI, Koji, Tokyo (JP)
(74) Representative: WESER & Kollegen Patentanwälte PartmbB

(57) **Abstract**

Provided is an ink-repellent member including an underlying portion that contains a tantalum oxide, and has a hydrocarbon compound represented by the following formula (1) bonded to a surface thereof via a Ta-O-Si bond: 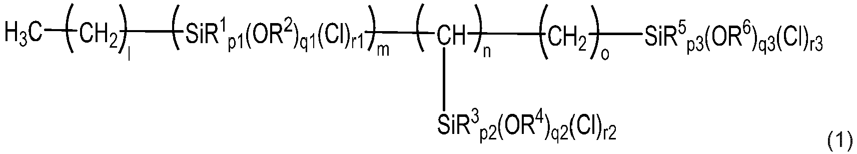 in the formula (1), R¹ to R⁶ are each independently selected from a methyl group and an ethyl group, "I" represents an integer of 0 or more, "m", "n", and "o" each represent an integer of from 0 to 2, p1, q1, and r1 each represent an integer of from 0 to 2, and p1+q1+r1=2 is satisfied, and p2 and p3 each represent an integer of from 0 to 2, and q2, r2, q3, and r3 each represent an integer of from 0 to 3, and p2+q2+r2=3 and p3+q3+r3=3 are satisfied.

## Description

### TECHNICAL FIELD

The present disclosure relates to an ink-repellent member, a method of producing an ink-repellent member, an ink jet head, and a method of producing an article.

### BACKGROUND

As a device that ejects an ink (hereinafter referred to as "ink jet head"), there has been known a bubble jet head that instantaneously vaporizes an ink through use of a heater to fly liquid droplets, a piezo jet head that propels liquid droplets through use of a piezoelectric element, or the like. In order to record a high-quality image through use of an ink jet head, it is required that ink droplets be ejected from ejection orifices that eject an ink while their straightness is kept along a predetermined direction. However, when a liquid droplet residue adheres to an orifice plate surface on the periphery of the ejection orifices, ink droplets are dragged by the residue at the time of ejection of the ink droplets to cause deflection in an ejection direction, with the result that the ink droplets may fly out of the predetermined direction. In view of the foregoing, in order to suppress the adhesion of the liquid droplet residue on the periphery of the ejection orifices, an ink-repellent film is formed on the periphery of the ejection orifices to provide an ink-repellent member.

For example, in Japanese Patent Laid-Open No. 2014-124879, there is disclosed that an underlying portion formed of an inorganic oxide is formed on an orifice plate surface, and a fluorine-containing silane coupling agent (hereinafter sometimes referred to as "fluorine compound") is chemically bonded thereto to form an ink-repellent member.

In addition, in an ink jet head, in order to remove a liquid droplet residue, paper dust, and the like, the orifice plate surface is generally cleaned with a wiper or the like. Thus, the ink-repellent member is required to have ink resistance and sliding resistance.

When a silane coupling agent is bonded to an underlying portion for the purpose of forming an ink-repellent member, a silicon oxide is generally used for an underlying portion, but a tantalum oxide may be used for the purpose of exhibiting liquid resistance as in Japanese Patent Laid-Open No. 2014-124879.

### SUMMARY

When a tantalum oxide is used for an underlying portion, there has been a demand for an ink-repellent member excellent in sliding resistance and ink resistance.

The present disclosure in its first aspect provides an ink-repellent member including an underlying portion that contains a tantalum oxide, and has a hydrocarbon compound represented by the following formula (1) bonded to a surface thereof via a Ta-O-Si bond: 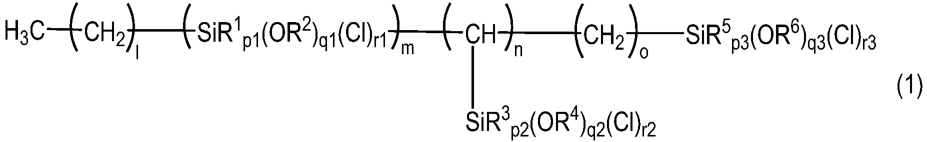 in the formula (1), R¹ to R⁶ are each independently selected from a methyl group and an ethyl group, "I" represents an integer of 0 or more, "m", "n", and "o" each independently represent an integer of from 0 to 2, p1, q1, and r1 each independently represent an integer of from 0 to 2, and p1+q1+r1=2 is satisfied, and p2 and p3 each independently represent an integer of from 0 to 2, and q2, r2, q3, and r3 each independently represent an integer of from 0 to 3, and p2+q2+r2=3 and p3+q3+r3=3 are satisfied as specified in claim 1. Optional features are specified in claims 2 to 7.

Further, the present disclosure in its second aspect provides a method of producing an ink-repellent member including an underlying portion that contains a tantalum oxide, and has a hydrocarbon compound bonded to a surface thereof via a Ta-O-Si bond, the method including the following steps (1) and (2):
(1) subjecting the surface of the underlying portion to plasma treatment under an atmosphere having an oxygen concentration of 50 vol% or more; and
(2) applying a hydrocarbon compound represented by the following formula (1) onto the surface of the underlying portion subjected to the plasma treatment in the step (1), followed by dehydration condensation: 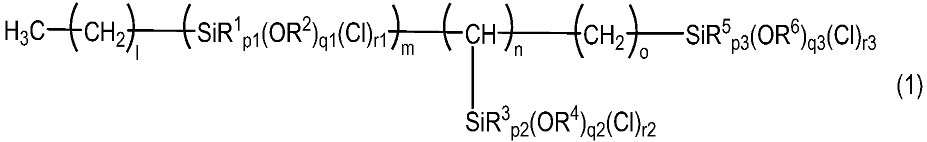
in the formula (1), R¹ to R⁶ are each independently selected from a methyl group and an ethyl group, "I" represents an integer of 0 or more, "m", "n", and "o" each independently represent an integer of from 0 to 2, p1, q1, and r1 each independently represent an integer of from 0 to 2, and p1+q1+r1=2 is satisfied, and p2 and p3 each independently represent an integer of from 0 to 2, and q2, r2, q3, and r3 each independently represent an integer of from 0 to 3, and p2+q2+r2=3 and p3+q3+r3=3 are satisfied as specified in claim 8.

Further, the present disclosure in its third aspect provides an ink jet head including: the above-mentioned ink-repellent member; and an ejection orifice arranged on a side of the ink-repellent member on which the underlying portion is arranged, the ejection orifice being configured to eject a liquid as specified in claim 9.

Further, the present disclosure in its fourth aspect provides a method of producing an article including ejecting a liquid through use of the above-mentioned inkjet head, wherein the liquid is an ink containing a functional material for forming a functional thin film or a functional element as specified in claim 10.

According to the present disclosure, an ink-repellent member and an ink jet head, which are each excellent in both sliding resistance and ink resistance, can be provided. In addition, an excellent ink-repellent member that does not utilize any specific fluorine compound (PFAS) can be formed.

Features of the present disclosure will become apparent from the following description of embodiments with reference to the attached drawings. The following description of embodiments is described by way of example.

### BRIEF DESCRIPTION OF THE DRAWINGS

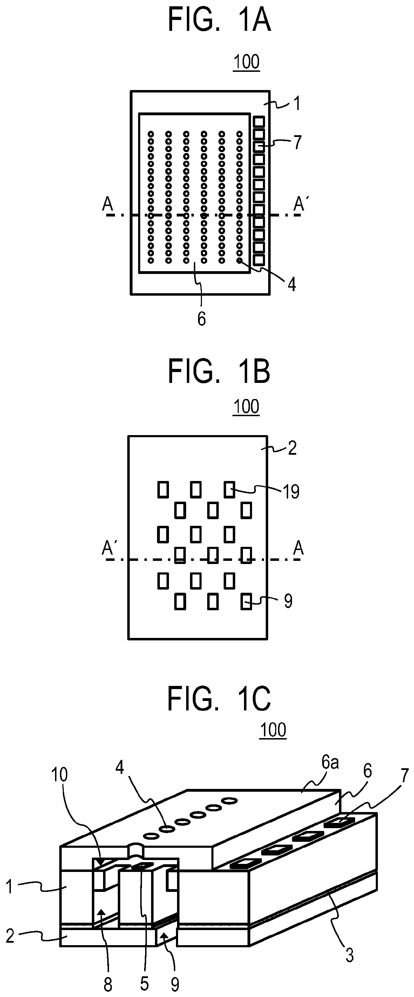

Fig. 1A is a top view of an ink jet head 100 according to one embodiment of the present disclosure, Fig. 1B is a bottom view thereof, and Fig. 1C is a partial perspective view for illustrating part of a cross-section taken along the line A-A' illustrated in each of Fig. 1A and Fig. 1B.

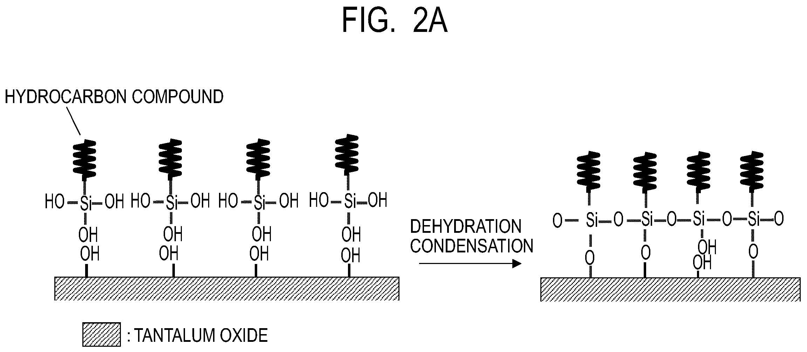

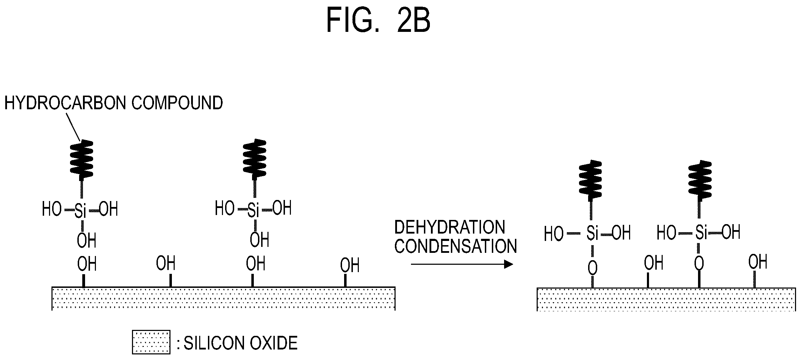

Fig. 2A is a schematic view for illustrating an orientation state of an ink-repellent member according to one embodiment of the present disclosure and a state after dehydration condensation thereof, and Fig. 2B is a schematic view for illustrating an orientation state of an ink-repellent member according to Comparative Example and a state after dehydration condensation thereof.

### DESCRIPTION OF THE EMBODIMENTS

An ink-repellent member, an ink jet head, and the like according to embodiments of the present disclosure are described with reference to the drawings. In the following, for example, the terms "ink repellency," "ink-repellent film," "ink-repellent material," and "ink-repellent member" are described, but may be read as "water repellency," "water-repellent film," "water-repellent material," and "water-repellent member" assuming an aqueous ink. In addition, when the present disclosure is carried out, it is not necessarily required to limit the kind and application of a liquid, and hence the terms "ink repellency," "ink-repellent film," "ink-repellent material," and "ink-repellent member" may be read as "liquid repellency," "liquid-repellent film," "liquid-repellent material," and "liquid-repellent member" in the following description. The embodiments described below are examples, and for example, the detailed configuration may be appropriately changed and carried out by a person skilled in the art without departing from the spirit of the present disclosure.

In the drawings referred to in the description of the following embodiments and Examples, elements with the same reference symbols have the same functions unless otherwise stated. In addition, the description "XX or more and YY or less" or "XX to YY" representing a numerical range means a numerical range including XX (lower limit) and YY (upper limit) that are end points unless otherwise stated. When the numerical ranges are described in stages, the upper limits and lower limits of the respective numerical ranges may be arbitrarily combined.

Herein, a liquid to be handled may be described as "ink", but the ink is not limited to a liquid for forming a character or an image. For example, the ink may be a liquid containing a functional material for forming a functional thin film, such as an electrode or an optical filter, or a functional element such as an organic EL element.

An ink-repellent member according to the present disclosure is an ink-repellent member including an underlying portion that contains a tantalum oxide, and has a hydrocarbon compound (hereinafter also simply referred to as "hydrocarbon compound") represented by the formula (1) to be described below bonded to a surface thereof via a Ta-O-Si bond.

The term "ink-repellent member" as used herein refers to a member including an underlying portion having a surface to which a hydrocarbon group-containing silane coupling agent (hydrocarbon compound) is bonded (member including an underlying portion having a hydrocarbon compound bonded to a surface thereof).

It has been known that a Ta-O bond formed when a silane coupling agent is bonded to a tantalum oxide has a small covalent bonding property (large ionic bonding property) as compared to a Si-O bond formed when a silicon oxide is used for an underlying portion ("Journal of The Surface Finishing Society of Japan," The Surface Finishing Society of Japan, 1998, Vol. 49, No. 2, pp. 191-194). In view of the foregoing, the inventor of the present disclosure has found that there is a problem in that reactivity between the underlying portion and the silane coupling agent is decreased, and the ability of an ink-repellent member is reduced owing to prolonged ink contact and sliding.

The inventor of the present disclosure has made investigations repeatedly in order to obtain an ink-repellent member that can maintain the ink resistance and the sliding resistance for a long period of time even when a tantalum oxide is used for an underlying portion. As a result, the inventor of the present disclosure has found that the above-mentioned object can be achieved by bonding a hydrocarbon compound represented by the formula (1) to a tantalum oxide.

The inventor of the present disclosure has evaluated wettability of each of the tantalum oxide and the hydrocarbon compound represented by the formula (1), and as a result, has found that the hydrocarbon compound represented by the formula (1) has a smaller contact angle than that of a fluorine compound suitably used as an ink-repellent film, and tends to wet-spread onto the underlying portion. In view of the foregoing, the ink-repellent material (ink-repellent film) can be applied to the underlying portion in a state of having small unevenness, and it is conceived that, by performing bonding in the state, a state in which a coating ratio of the ink-repellent film on the underlying portion is high can be achieved.

In addition, the inventor of the present disclosure has made investigations on the molecular weight of the hydrocarbon compound to be bonded, and as a result, has found that when the molecular weight is a certain value or less, the sliding resistance may be improved. When the molecular weight is increased, a coating thickness is increased, and hence it has been considered that the sliding resistance is improved. However, meanwhile, steric hindrance is increased, and hence it is assumed that the ink-repellent material becomes less likely to be highly oriented to an interface with the underlying portion. When a highly oriented state can be achieved, the distance between the molecules of a hydrocarbon compound is reduced, and it is conceived that the molecules of the hydrocarbon compound are easily bonded to each other via a siloxane bond (-Si-O-Si-) having a higher covalent bonding property than that of a Ta-O-Si bond. As a result, it is conceived that the coating ratio of the underlying portion can be improved by the formation of a three-dimensional bonding network.

Even in a combination in which the bonding with the silane coupling agent is unlikely to occur as in the case of the tantalum oxide, it is conceived that the bonding not only between the underlying portion and the ink-repellent material but also between the molecules of the ink-repellent material can be accelerated, and an ink-repellent member excellent in ink resistance and sliding resistance can be achieved, by using a hydrocarbon compound having satisfactory wettability as the ink-repellent material, and by reducing the steric hindrance of the hydrocarbon compound to cause the hydrocarbon compound to be highly oriented to the interface with the underlying portion.

In addition, the contact angle of the hydrocarbon compound represented by the formula (1) with the surface of the underlying portion that contains the tantalum oxide is small, and hence, as illustrated in Fig. 2A, the hydrocarbon compound can be applied to the surface of the underlying portion that contains the tantalum oxide without unevenness. In view of the foregoing, the molecules of the hydrocarbon compound can be present in the vicinity of each other to the extent that the bonding between the surface of the underlying portion and the hydrocarbon compound, and the bonding between the molecules of the hydrocarbon compound can be formed at high density. Accordingly, the surface of the underlying portion can be uniformly coated with the hydrocarbon compound (ink-repellent film). Meanwhile, for example, when the hydrocarbon compound is applied to the silicon oxide, the contact angle becomes higher, and as illustrated in Fig. 2B, the molecules of the hydrocarbon compound aggregate or a gap is generated between the molecules of the hydrocarbon compound. Accordingly, uniformity of coating with the hydrocarbon compound becomes lower than that of the underlying portion that contains the tantalum oxide. As described above, it is conceived that an ink-repellent member excellent in ink resistance and sliding resistance, in which a surface of an underlying portion is highly densely coated with a hydrocarbon compound, can be achieved by using the underlying portion that contains a tantalum oxide.

### (Ink Jet Head)

First, an ink jet head according to one embodiment of the present disclosure may be an ink jet head including: the ink-repellent member according to the present disclosure; and an ejection orifice arranged on a side of the ink-repellent member on which the underlying portion and the hydrocarbon compound are arranged, the ejection orifice being configured to eject a liquid. The configuration of the ink jet head according to this embodiment is described. Fig. 1A is a top view of an ink jet head 100 according to this embodiment. Fig. 1B is a bottom view of the ink jet head 100. In addition, Fig. 1C is a partial perspective view for illustrating part of a cross-section taken along the line A-A' illustrated in each of Fig. 1A and Fig. 1B.

The ink jet head 100 includes a first flow path substrate 1 serving as a first member, a second flow path substrate 2 serving as a second member, an adhesive layer 3, ejection orifices 4, ejection energy-generating elements 5, an orifice plate 6 (ink-repellent member), electrodes 7, and an ink tank chamber. The ink tank chamber is not shown in Fig. 1A to Fig. 1C. In addition, among the constituent components of the ink jet head, components that are not directly related to the description of the present disclosure (e.g., an electric circuit and wiring) are not shown.

A set of the first flow path substrate 1 and the second flow path substrate 2, a set of the first flow path substrate 1 and the orifice plate 6, and a set of the second flow path substrate 2 and the ink tank chamber are each bonded to be integrated with each other via the adhesive layer 3 to form a flow path structure. In the flow path structure, a first through-flow path 8, a second through-flow path 9, and a third through-flow path 19 are formed and communicate to each other to form an ink supply path. In Fig. 1C, only part of the adhesive layer 3 is illustrated for the sake of convenience in illustration.

The ink is supplied from the ink tank chamber (not shown) to a liquid flow path 10 through the second through-flow path 9 formed in each of the second flow path substrate 2 and the first flow path substrate 1, and is ejected from the ejection orifices 4 after being given ejection energy by the ejection energy-generating elements 5. The ink that has not been ejected from the ejection orifices 4 flows back to the ink tank chamber through the first through-flow path 8 formed in the first flow path substrate 1 and the third through-flow path 19 (circulation return path) formed in the second flow path substrate 2.

Although the plurality of ejection orifices 4 are arranged in the orifice plate 6, an arrangement method (number and position) for the ejection orifices 4 is not limited to the illustrated example. The orifice plate 6 has, on an outer surface thereof, that is, an orifice surface 6a that is a surface on an opposite side to the liquid flow path 10, an underlying portion to be described later, and a hydrocarbon compound is bonded to the surface of the underlying portion. Thus, the ink-repellent film is formed. On the ejection orifices 4 arranged on the orifice surface 6a, the ink-repellent film is not formed. On the first flow path substrate 1, the ejection energy-generating elements 5 for ejecting a liquid are arranged at positions corresponding to the respective ejection orifices 4, and the ejection energy-generating elements 5 are driven in response to an electric signal transmitted from the outside via the electrodes 7. For example, electrothermal conversion elements or piezoelectric elements are suitably used as the ejection energy-generating elements 5. Silicon is suitable as a material for a base material of the orifice plate 6, but silicon carbide, silicon nitride, various glasses, such as quartz glass and borosilicate glass, various ceramics, such as alumina and gallium arsenide, and resins such as polyimide may each be used as the material in addition to silicon. In this embodiment, the orifice plate is formed of the ink-repellent member, but the ink jet head itself may be formed of the ink-repellent member.

### (Underlying Portion)

An underlying portion to be arranged on, for example, the outer surface (orifice surface 6a) of the orifice plate 6 illustrated in Fig. 1C is formed so as to contain an inorganic oxide. The underlying portion has a hydroxy group formed on a surface thereof and hence can form a chemical bond with a hydrocarbon compound having a reactive silyl group (hydrocarbon group-containing silane coupling agent). Through the formation of the chemical bond, the adhesiveness between the underlying portion and the hydrocarbon compound can be improved. The underlying portion may be formed as an underlying film or an underlying layer on the base material. However, when the base material itself (bulk material) is formed so as to contain an inorganic oxide, the base material itself may be used as the underlying portion.

In the present disclosure, the underlying portion contains a tantalum oxide as the inorganic oxide. The tantalum oxide forms compounds each having a valence of from +2 to +5 as an oxidation number. Of those, tantalum pentoxide is preferred from the viewpoint of being capable of forming a hydroxy group to be a reaction site in a large amount. In addition to the tantalum oxide, the underlying portion may further contain an oxide material, such as silicon oxide, zirconia, alumina, titania, hafnia, cerium oxide, tungsten oxide, niobium oxide, or yttrium oxide.

As a method of producing the underlying portion containing the tantalum oxide, for example, an underlying film may be formed on a base material (e.g., silicon) by a sputtering method, an ion-assisted vapor deposition method, an atomic layer deposition (ALD) method, or the like. Of those, the ALD method is preferably used from the viewpoint of being capable of forming a high-density film. When the density is high, the ink resistance to an alkaline ink is further improved.

When the underlying film is formed as the underlying portion on the base material, silicon is generally used as the base material of a lower layer of the underlying film. In this case, a thickness of the underlying film is preferably 10 nm or more, more preferably 50 nm or more from the viewpoint of protecting silicon from an ink. In addition, the thickness is preferably 300 nm or less, more preferably 200 nm or less from the viewpoint of suppressing the cohesive failure at the time of sliding.

### (Surface Treatment of Underlying Portion)

A method of producing an ink-repellent member according to one embodiment of the present disclosure is a method of producing an ink-repellent member including an underlying portion that contains a tantalum oxide, and has a hydrocarbon compound bonded to a surface thereof via a Ta-O-Si bond, the method including the following steps (1) and (2):
(1) subjecting the surface of the underlying portion having no hydrocarbon compound represented by the following formula (1) bonded thereto to plasma treatment under an atmosphere having an oxygen concentration of 50 vol% or more; and
(2) applying a hydrocarbon compound represented by the following formula (1) onto the surface of the underlying portion subjected to the plasma treatment in the step (1), followed by dehydration condensation: 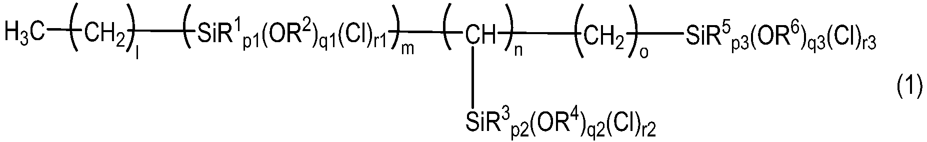
in the formula (1), R¹ to R⁶ are each independently selected from a methyl group and an ethyl group, "I" represents an integer of 0 or more, "m", "n", and "o" each independently represent an integer of from 0 to 2, p1, q1, and r1 each independently represent an integer of from 0 to 2, and p1+q1+r1=2 is satisfied, and p2 and p3 each independently represent an integer of from 0 to 2, and q2, r2, q3, and r3 each independently represent an integer of from 0 to 3, and p2+q2+r2=3 and p3+q3+r3=3 are satisfied.

In the present disclosure, to form hydroxy groups serving as reaction sites in large amounts, the tantalum oxide serving as the underlying portion is preferably subjected to surface treatment. Examples of the surface treatment include methods, such as UV ozone treatment and plasma treatment, and the tantalum oxide is preferably subjected to treatment with oxygen plasma. As a result of investigations made by the inventor of the present disclosure, it has been found that, even when the surface of the underlying portion is subjected to plasma treatment under an atmosphere of any one of oxygen or argon, a contact angle after the treatment becomes low (e.g., a static contact angle of <5°), but a hydroxy group can be formed in a larger amount by the treatment under an oxygen atmosphere as compared to the treatment under an argon atmosphere.

In order to investigate the mechanism, the surface after plasma treatment was measured by X-ray photoelectron spectroscopy (XPS), and a ratio of a valence of from +1 to +5 was calculated from the analysis of Ta 4f. As a result, it was recognized that a ratio of a valence of +5 was decreased and reduction occurred in the case of the treatment under an argon atmosphere (95% before the treatment, 85% after the treatment). Meanwhile, a decrease in ratio of a valence of +5 was not recognized in the case of the treatment under an oxygen atmosphere. Thus, it is presumed that, when a tantalum oxide is subjected to plasma treatment, reduction does not occur, and a hydroxy group can consequently be formed in a large amount by the treatment under an oxygen atmosphere.

For example, when plasma treatment is performed under a mixed atmosphere of oxygen and another gas such as argon, an oxygen concentration is preferably 50 vol% or more, more preferably 75 vol% or more, still more preferably 80 vol% or more. The treatment may be performed under an atmosphere containing only oxygen (oxygen concentration is 100 vol%). When the oxygen concentration is 50 vol% or more, a hydroxy group is sufficiently formed.

In addition, a bias may be applied in order to perform the treatment by accelerating the plasma generated during the treatment. As a result, the surface treatment is accelerated, and a hydroxy group can be further formed.

### (Hydrocarbon Compound)

In the present disclosure, a silane coupling agent having a hydrocarbon group (hydrocarbon compound represented by the formula (1)) is used as the ink-repellent material. As described above, the hydrocarbon compound represented by the formula (1) tends to wet-spread onto the tantalum oxide, and the coating ratio of the underlying portion can be increased by performing bonding in the state.

The hydrocarbon compound represented by the formula (1) has a main chain structure formed of a linear hydrocarbon group, and one of the ends on both sides of the main chain forms a chemical bond (Ta-O-Si) with the hydroxy group on the surface of the tantalum oxide of the underlying portion. The hydrocarbon compound to be used in the production of the ink-repellent member in order to form the Ta-O-Si bond has at least one reactive silyl group represented in the following formula (1). When the hydrocarbon compound has two reactive silyl groups, a case where the hydrocarbon compound has two reactive silyl groups at both ends of the main chain structure is assumed, but in that case, the ends are fixed. Accordingly, the ink repellency becomes insufficient. When the hydrocarbon compound has a reactive silyl group only on one end side as in the present disclosure, mobility of the main chain is increased, and the ink repellency can be improved.

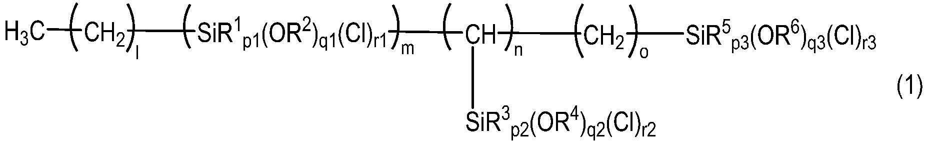

In the formula (1), R¹ to R⁶ are each independently selected from a methyl group and an ethyl group. In addition, "I" represents an integer of 0 or more, "m", "n", and "o" each independently represent an integer of from 0 to 2, p1, q1, and r1 each independently represent an integer of from 0 to 2, and p1+q1+r1=2 is satisfied, and p2 and p3 each independently represent an integer of from 0 to 2, and q2, r2, q3, and r3 each independently represent an integer of from 0 to 3, and p2+q2+r2=3 and p3+q3+r3=3 are satisfied.

R¹, R³, and/or R⁵ are each preferably a methyl group from the viewpoint of reducing the steric hindrance. In addition, R², R⁴, and/or R⁶ are each preferably a methyl group from the viewpoint that the hydrolysis is rapid, and hence the condensation reaction is rapid.

q1+r1, q2+r2, and q3+r3 each represent the number of reaction sites, and when q1+r1, q2+r2, and/or q3+r3 each represent 1 or more, the hydrocarbon compound can form a chemical bond with the underlying portion. However, when the underlying portion has low reactivity with the silane coupling agent like the tantalum oxide, p1=p2=p3=0 is preferably satisfied, that is, q1+r1=2, q2+r2=3, and q3+r3=3 are preferably satisfied. This is because, when the number of reaction sites is large, at the time of the orientation to the interface with the underlying portion, bonding not only with the underlying portion but also between the molecules of the hydrocarbon compound represented by the formula (1) (siloxane bond, -Si-O-Si-) is formed to increase the coating ratio on the underlying portion, and hence durability can be improved. The number of reaction sites is preferably 3 or more, more preferably 5 or more.

It is still more preferred that r1, r2, and r3 represent 2, 3, and 3, respectively. This is because a chloro group has a higher hydrolysis rate than that of an alkoxysilyl group, and hence the condensation reaction can be accelerated to increase the bonding ratio with respect to the underlying portion.

The ink-repellent member according to the present disclosure is an ink-repellent member including an underlying portion that contains a tantalum oxide, the portion being subjected to surface treatment with a hydrocarbon compound represented by the formula (1). The ink-repellent member may be represented by, for example, the following formula (A) under a state in which the hydrocarbon compound represented by the formula (1) is bonded to the underlying portion: 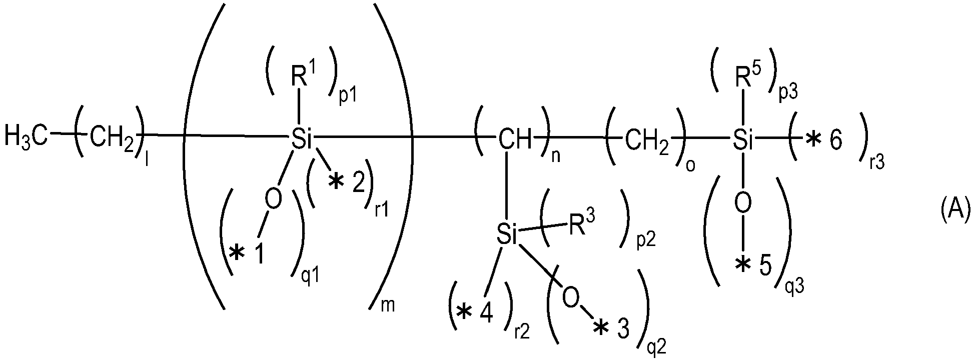 in the formula (A), R¹, R³, and R⁵ each independently represent a methyl group or an ethyl group, and *1, *3, and *5 each independently represent a bonding position of the surface of the underlying portion with respect to a tantalum atom. *1, *3, and *5 may each independently represent a bonding position with respect to a silicon atom, and the molecules of the hydrocarbon compound represented by the formula (1) may form a Si-O-Si bond via *1, *3, and/or *5. In addition, *1, *3, and *5 may each independently represent a bonding position with respect to a methyl group or an ethyl group. *2, *4, and *6 each independently represent a bonding position with respect to an oxygen atom on the surface of the underlying portion or an oxygen atom of the hydrocarbon compound represented by the formula (1). In addition, *2, *4, and *6 may each independently represent a bonding position with respect to a chloro group. "I" represents an integer of 0 or more, "m", "n", and "o" each independently represent an integer of from 0 to 2, p1, q1, and r1 each independently represent an integer of from 0 to 2, and p1+q1+r1=2 is satisfied, and p2 and p3 each independently represent an integer of from 0 to 2, and q2, r2, q3, and r3 each independently represent an integer of from 0 to 3, and p2+q2+r2=3 and p3+q3+r3=3 are satisfied. At least one of *1 to *6 represents a bonding position with respect to a tantalum atom or an oxygen atom on the surface of the underlying portion.

In the present disclosure, the phrase "state in which the hydrocarbon compound represented by the formula (1) is highly oriented" means that the following state is achieved at the interface with the underlying portion. The reactive silyl group of the hydrocarbon compound represented by the formula (1) is subjected to hydrolysis to produce a silanol group. The silanol group of the hydrocarbon compound and the hydroxy group of the underlying portion, or the silanol groups of the hydrocarbon compound become adjacent to each other via a hydrogen bond, and a state in which a Ta-O-Si bond in the former case and a Si-O-Si bond in the latter case may be produced through the condensation reaction.

In addition, the hydrocarbon compound preferably has a methyl structure (methyl group) at the other end. The methyl structure has small surface free energy, and when the main chain has mobility, the methyl structure can express high ink repellency.

The main chain structure of the hydrocarbon compound preferably has a polymethylene structure from the viewpoint of improving ink repellency and sliding resistance.

A method of producing a film having a methyl structure at an end thereof by subjecting an organic silicon compound to plasma polymerization is also known. However, a plasma polymerized film is brittle, and for example, when the plasma polymerized film is formed into an ink-repellent member of an ink jet head, the plasma polymerized film is a film having poor sliding resistance. When a hydrocarbon compound is chemically bonded to a hard inorganic oxide underlying portion as in the present disclosure, an ink-repellent member having sufficient durability can be achieved.

The molecular weight of the hydrocarbon compound represented by the formula (1) is preferably 100 or more and 800 or less, more preferably 200 or more and 600 or less. When the molecular weight is 100 or more, the thickness of the ink-repellent material increases, and the ink-repellent member is excellent in sliding resistance. In addition, when the molecular weight is 800 or less, steric hindrance is suppressed, and hence the ink-repellent material is easily oriented to the interface. Accordingly, the coating ratio of the underlying portion is improved, and the ink-repellent member is excellent in sliding resistance and ink resistance.

In the hydrocarbon compound represented by the formula (1), "m", "n", and "o" in the formula (1) can represent 1, 0, and 1, respectively. In addition, In the hydrocarbon compound represented by the formula (1), "m", "n", and "o" in the formula (1) can represent 0, 1, and 1, respectively. In the hydrocarbon compound represented by the formula (1), "m", "n", and "o" in the formula (1) can represent 0, 0, and 0, respectively. Preferred examples of the hydrocarbon compound represented by the formula (1) include compounds represented by the following formulae (2) to (10): 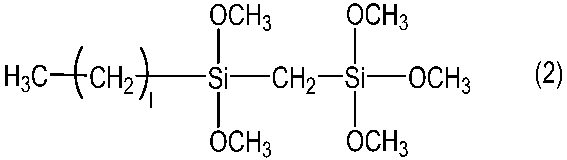 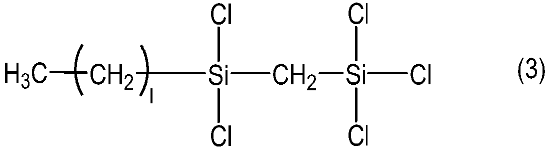 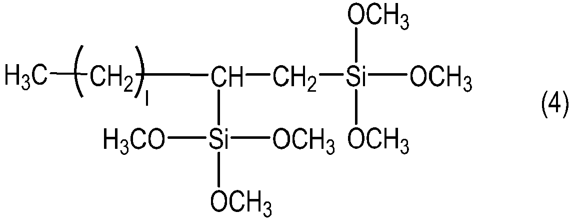 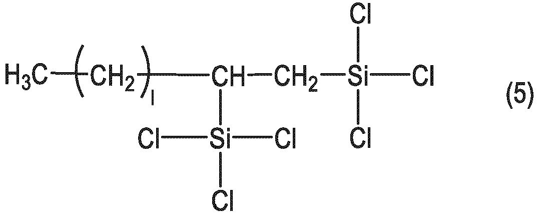 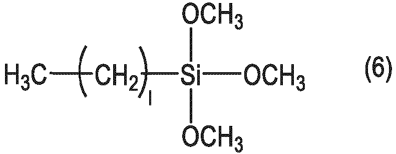 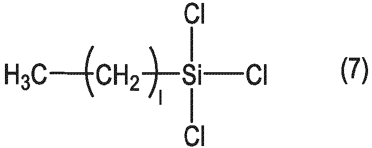 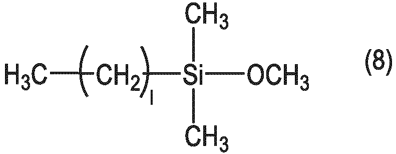 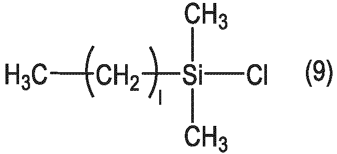 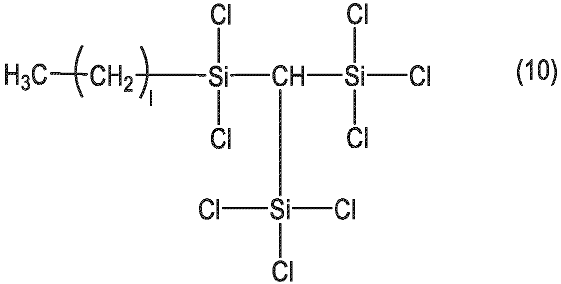 in the formulae (2) to (10), "I" represents an integer of 0 or more.

### (Method of producing Ink-repellent Member)

Subsequently, a method of bonding the hydrocarbon compound represented by the formula (1) to a surface of an underlying portion containing a tantalum oxide is described. The hydrocarbon compound represented by the formula (1) may be bonded by silane coupling treatment. An example thereof is described below.

First, for example, an underlying portion that is an underlying film containing a tantalum oxide is formed on a substrate such as an orifice plate. An example of a method of forming a tantalum oxide as an underlying film is a method of forming a tantalum oxide by an atomic layer deposition (ALD) method.

Next, a hydroxy group is formed on the surface of the underlying portion by the above-mentioned plasma treatment.

Next, a hydrocarbon compound is applied to the surface of the underlying portion having the hydroxy group formed thereon. There is no particular limitation on a method for the application, and examples thereof may include a vacuum vapor deposition method, a thermal vapor deposition method, a spray coating method, a spin coating method, and a dip coating method.

Subsequently, an alkoxysilyl group or a halogenated silyl group at the end of the hydrocarbon compound is hydrolyzed to be converted to a silanol group (Si-OH group). Then, the silanol group of the hydrocarbon compound and the hydroxy group formed on the underlying portion are subjected to a dehydration condensation reaction to form a Ta-O-Si bond. In addition, a Si-O-Si bond is formed between the molecules of the hydrocarbon compound depending on the state in which the hydrocarbon compound is oriented.

Hydrolysis is caused by exposure to moisture, and is also caused by adsorbed water that exists on the surface of the underlying portion. The dehydration condensation reaction may occur also at room temperature, but may be accelerated by raising the temperature (e.g., from 100°C to 120°C). In particular, when the underlying portion is formed of a tantalum oxide, the covalent bonding property of a Ta-O bond of the Ta-O-Si bond is small, and the reaction is less likely to occur. Thus, in the reaction at room temperature, reaction energy required for bonding may be insufficient. In order to sufficiently increase the bonding amount on the underlying portion of the hydrocarbon compound, it is preferred that the applied hydrocarbon compound be caused to react by heating at high temperature to accelerate the bonding between the hydrocarbon compound and the underlying portion. Specifically, for example, it is preferred that the applied hydrocarbon compound be heated to 100°C or more to cause dehydration condensation.

A reaction time may be appropriately selected in accordance with the temperature, and the reaction time is, for example, about 10 hours at room temperature and about 1 hour under the condition of 120°C.

Subsequently, the underlying portion is washed so that the remaining unbonded hydrocarbon compound may be removed. There is no particular limitation on a method for the washing, but for example, it is only required that the ink-repellent member be immersed in a solvent that is compatible with the hydrocarbon compound. The underlying portion is washed to the extent that it can be visually recognized that the hydrocarbon compound does not remain on the underlying portion.

The thickness of the hydrocarbon compound is preferably 1 nm or more. When the thickness is 1 nm or more, the sliding resistance can be increased. Specifically, the number represented by "I" in the formula (1) is preferably equal to or more than 6.

After the washing solvent is dried, ink resistance and sliding resistance may be evaluated.

The unbonded hydrocarbon compound may also contribute to an increase in durability, and hence, in general, the unbonded hydrocarbon compound is actively used without being removed for practical purposes. However, the unbonded hydrocarbon compound is diffused into an ink, for example, during the contact with the ink and is removed over time. As a result, the underlying portion having low liquid repellency is exposed, leading to deterioration of an ink-repellent function. Thus, in each of the evaluations of ink resistance and sliding resistance, the evaluation can be more accurately performed by removing the unbonded hydrocarbon compound.

### (Method of producing Article including using Ink-repellent Member)

A method of producing an article according to one embodiment of the present disclosure may be a method of producing an article including ejecting a liquid through use of the above-mentioned ink-repellent member (e.g., an inkjet head), wherein the liquid is an ink containing a functional material for forming a functional thin film or a functional element. The article may be an intermediate product or a final product. The method of producing an article according to this embodiment is suitable for producing, for example, an article such as an organic EL (OLED) panel through use of the ink jet head. The method of producing an article of this embodiment is advantageous in at least one of performance, quality, productivity, or production cost of an article as compared to the related-art methods.

### [Examples]

### Specific Examples and Comparative Example are described below.

### (Example 1)

Tantalum pentoxide was laminated to 100 nm on a Φ3-inch silicon substrate with an ALD film-forming device.

Next, the silicon substrate having the tantalum pentoxide formed thereon as an underlying film was placed in a chamber of a plasma treatment device, and a surface of the underlying film was treated. Specifically, after the inside of the chamber was evacuated, only oxygen was introduced. Then, plasma was generated, and a bias was applied to accelerate the plasma (output power value: 120 W). This state was maintained for 300 seconds.

Subsequently, a hydrocarbon compound CL-1 was applied by spin coating onto the surface having the underlying film formed thereon of the silicon substrate having the surface of the underlying film subjected to treatment (2,000 rpm, 30 s). When the application was performed, CL-1 was dissolved in hexane to prepare a 1.0 mM solution, and the solution was applied by spin coating.

Subsequently, the silicon substrate having the hydrocarbon compound applied thereonto was placed in an oven, and was allowed to stand still for 45 minutes under an environment at 120°C.

Subsequently, the taken-out silicon substrate was washed by immersion in a solvent (hexane) for 30 seconds so that the hydrocarbon compound adhering to the surface was removed. The washing was repeated twice through use of a fresh solvent, and the solvent was dried. Thus, an ink-repellent member having the hydrocarbon compound bonded thereto was obtained.

For the purpose of evaluating the wettability, CL-1 (2.0 µl) was defined as a droplet, and a contact angle with respect to tantalum pentoxide ten seconds after the landing of a droplet was measured with the apparatus described in Evaluation 1. As a result, the contact angle was 4.5°.

### (Examples 2 to 12)

An ink-repellent member according to each of Examples was produced by the same method as that in Example 1 except that the conditions for the hydrocarbon compound were changed to conditions shown in Table 1.

### (Comparative Example 1)

An ink-repellent member according to Comparative Example 1 was produced by the same method as that in Example 1 except that a thermal oxide film of silicon was used for an underlying portion. CL-1 (2.0 µl) was defined as a droplet, and a contact angle ten seconds after the landing of a droplet onto a SiO₂ underlying portion according to Comparative Example 1 was measured. As a result, the contact angle was 24.5°.

Methods of evaluating the underlying portion and the ink-repellent member according to each of Examples and Comparative Example are described below.

### (Evaluation 1: Bonding Ratio of Hydrocarbon Compound)

The bonding ratio of the ink-repellent member to which the hydrocarbon compound is bonded is evaluated by the following procedure. Regarding a surface of an underlying portion of an ink-repellent member before the following immersion treatment, the ratio of a carbon atom amount (ratio of a carbon atom amount with respect to the total of the carbon atom amount, an oxygen atom amount, a silicon atom amount, and a tantalum atom amount) was measured by X-ray photoelectron spectroscopy (XPS). In addition, regarding the surface of the underlying portion of the ink-repellent member after the following immersion treatment was performed, the ratio of a carbon atom amount (ratio of a carbon atom amount with respect to the total of the carbon atom amount, an oxygen atom amount, a silicon atom amount, and a tantalum atom amount) was measured, and the bonding ratio (%) was evaluated from the ratio of the carbon atom amount after the immersion treatment to that before the immersion treatment (carbon atom amount (atm%) after the immersion treatment/carbon atom amount (atm%) before the immersion treatment).

In Example 1, the ratio of the carbon atom amount on the surface side of the ink-repellent member before the immersion treatment was 52.5 atm%. In addition, in Example 1, the ratio of the carbon atom amount on the surface side of the ink-repellent member after the following immersion treatment was performed was 42.0 atm%, and the bonding ratio was 80%. The bonding ratios of other hydrocarbon compounds are also shown in Table 1.

### (Immersion Treatment)

(1) A test piece (thickness: about 700 µm, area: about 2 cm on each side) including a surface of an underlying portion of an ink-repellent member having a hydrocarbon compound bonded thereto is placed in a sealable container containing hexadecane (manufactured by Kishida Chemical Co., Ltd.), and is immersed in the hexadecane so that the test piece may be entirely immersed therein.
(2) The test piece is maintained at 90°C for 4 hours in a sealed state.
(3) The test piece is taken out and washed with hexane so that hexadecane may be removed.
(4) The test piece is air-dried so that hexane may be removed.

### XPS measurement conditions

Measurement device: Quantera II (product name), manufactured by ULVAC-PHI, Incorporated
X-ray source: AlKα
Analysis region: ϕ200 µm
Pass energy: 140 eV
Number of scans: 10
Detection angle: 45°
Detection elements: C, O, Si, Ta
XPS peaks: C1s, O1s, Si2p, Ta4f

An unbonded component that is simply aggregated or adsorbed is removed by the immersion treatment, and only a component that actually forms a chemical bond at the interface with the underlying portion remains. Accordingly, the bonding ratio to be calculated by this method may be used as an index of the ink resistance and sliding resistance of a liquid-repellent member.

### (Evaluation 2: Evaluation of Ink Resistance)

The ink resistance of an ink-repellent member having a hydrocarbon compound bonded thereto is evaluated by the following procedure. An alkali dye ink (BCI-7C, manufactured by CANON KABUSHIKI KAISHA) was used as an ink. The ink is placed in a PFA container. The ink-repellent member is immersed in the ink so that the entire surface thereof having the hydrocarbon compound bonded thereto may be brought into contact with the ink, followed by the sealing of the container with a lid. The container is placed in an oven in this state, and the temperature of 60°C is maintained for 20 weeks. The taken-out ink-repellent member was thoroughly washed with water so that the ink was removed. Then, a receding contact angle was measured and evaluated by the following method.

A contact angle meter (product name: DM-701, manufactured by Kyowa Interface Science Co., Ltd., analysis software: FAMAS (ver. 3.5.5)) was used. Conditions for the measurement were as described below.
·Droplets: 2 µL (pure water)
·Receding contact angle: the angle was calculated by a sessile drop method.

The receding contact angle was measured specifically by the following method. The contact angle was measured at 80 points at intervals of 15 seconds after the landing of a droplet. The following calculation was performed in the order from a time of 0 seconds through use of the values of the contact angle and the contact radius (unit: µm) at a certain time calculated from the above-mentioned software, and the following processes (A) and (B) were performed.
(A) When the value of a contact radius at a time "t" was represented by Rt and the value of a contact radius after t+90 seconds was represented by Rₜ₊₉₀, the value "x" of (Rt-Rₜ₊₉₀)² was calculated.
(B) When the value "x" was 200 or less, the process (A) was performed again, and the contact angle at a time "t" when the value "x" first exceeded 200 was defined as the receding contact angle.

A: The receding contact angle is 100° or more.
B: The receding contact angle is 95° or more and less than 100°.
C: The receding contact angle is 90° or more and less than 95°.
D: The receding contact angle is 85° or more and less than 90°.
E: The receding contact angle is less than 85°.

(An ink-repellent member evaluated to be Rank D or higher satisfies practicality as an ink-repellent film (ink-repellent member).)

### (Evaluation 3: Evaluation of Sliding Resistance)

The sliding resistance of an ink-repellent member having a hydrocarbon compound bonded thereto is evaluated by the following procedure. A high-density felt material (CS-7, manufactured by Taber Industries) is attached as a sliding material to a friction and wear tester (FPR-2100, manufactured by Rhesca Co., Ltd.), and a reciprocating sliding test is performed on the surface of the ink-repellent member having the hydrocarbon compound bonded thereto. The reciprocating sliding test is performed under the conditions of a sliding load of 650 g, a sliding width of 10 mm, a linear velocity of 50.8 mm/sec, and the number of sliding cycles of 30,000. The receding contact angle of the surface of the ink-repellent member after sliding was measured and evaluated by the method described in Evaluation 1.

The specifications of the underlying films and the ink-repellent members according to Examples 1 to 12 and Comparative Example 1 are shown in Table 1 below.

**Table 1**

| | Kind of underlying portion | Hydrocarbon compound | | | | | Bonding ratio [%] |
|---|---|---|---|---|---|---|---|
| | | Kind of material | Molecular weight | Number represented by "I" in formula (1) | Number of reaction sites | Reactive group | |
| Example 1 | Ta₂O₅ | CL-1 | 375 | 17 | 3 | OCH₃ | 80 |
| Example 2 | Ta₂O₅ | CL-2 | 347 | 15 | 3 | OCH₃ | 95 |
| Example 3 | Ta₂O₅ | CL-3 | 291 | 11 | 3 | OCH₃ | 98 |
| Example 4 | Ta₂O₅ | CL-4 | 234 | 7 | 3 | OCH₃ | 98 |
| Example 5 | Ta₂O₅ | CL-5 | 178 | 3 | 3 | OCH₃ | 98 |
| Example 6 | Ta₂O₅ | CL-6 | 543 | 29 | 3 | OCH₃ | 70 |
| Example 7 | Ta₂O₅ | CL-7 | 766 | 44 | 3 | OCH₃ | 65 |
| Example 8 | Ta₂O₅ | CL-8 | 388 | 17 | 3 | CI | 95 |
| Example 9 | Ta₂O₅ | CL-9 | 304 | 11 | 3 | CI | 98 |
| Example 10 | Ta₂O₅ | CL-10 | 501 | 17 | 5 | CI | 98 |
| Example 11 | Ta₂O₅ | CL-11 | 383 | 7 | 6 | OCH₃ | 98 |
| Example 12 | Ta₂O₅ | CL-12 | 342 | 17 | 1 | OCH₃ | 75 |
| Comparati ve Example 1 | SiO₂ | CL-1 | 375 | 17 | 3 | OCH₃ | 60 |

Abbreviations described in Table 1 are as described below.

·CL-1: Compound represented by the formula (6) where "I" is 17 (octadecyltrimethoxysilane, manufactured by Tokyo Chemical Industry Co., Ltd.).

·CL-2: Compound represented by the formula (6) where "I" is 15 (hexadecyltrimethoxysilane, manufactured by Tokyo Chemical Industry Co., Ltd.).

·CL-3: Compound represented by the formula (6) where "I" is 11 (dodecyltrimethoxysilane, manufactured by Tokyo Chemical Industry Co., Ltd.).

·CL-4: Compound represented by the formula (6) where "I" is 7 (trimethoxy-n-octylsilane, manufactured by Tokyo Chemical Industry Co., Ltd.).

·CL-5: Compound represented by the formula (6) where "I" is 3 (butyltrimethoxysilane, manufactured by Tokyo Chemical Industry Co., Ltd.).

·CL-6 and CL-7: Compounds represented by the formula (6) where "I" is the number shown in Table 1 and having molecular weights shown in Table 1, which are synthesized with reference to Angewandte Chemie International Edition 2016, 55(40), 12295-12299.

·CL-8: Compound represented by the formula (7) where "I" is 17 (trichlorooctadecylsilane, manufactured by Tokyo Chemical Industry Co., Ltd.).

·CL-9: Compound represented by the formula (7) where "I" is 11 (dodecyltrichlorosilane, manufactured by Tokyo Chemical Industry Co., Ltd.).

·CL-10: Compound represented by the formula (3) where "I" is 17 (1-n-octadecyl-1,1,3,3,3-pentachloro-1,3-disilapropane, manufactured by Gelest Inc.).

·CL-11: Compound represented by the formula (4) where "I" is 7 (1,2-bis(trimethoxysilyl)decane, manufactured by Gelest Inc.).

·CL-12: Compound represented by the formula (8) where "I" is 17 (methoxy(dimethyl)octadecylsilane, manufactured by Tokyo Chemical Industry Co., Ltd.).

The results of Evaluation 1 and Evaluation 2 of the ink-repellent films according to Examples 1 to 12 and Comparative Example 1 are collectively shown in Table 2 below.

**Table 2**

| | Sliding resistance | Ink resistance |
|---|---|---|
| Example 1 | B | B |
| Example 2 | A | B |
| Example 3 | B | C |
| Example 4 | C | C |
| Example 5 | D | C |
| Example 6 | C | C |
| Example 7 | D | D |
| Example 8 | A | B |
| Example 9 | B | C |
| Example 10 | A | A |
| Example 11 | B | A |
| Example 12 | C | C |
| Comparative Example 1 | E | E |

From Table 2, it can be said that the ink-repellent members according to Examples 1 to 12 have more excellent practical characteristics than those of the ink-repellent member according to Comparative Example 1.

Various embodiments have been described in detail above but it will be understood that the present disclosure is not limited to these embodiments and encompasses all modifications, variants, alternatives and equivalents falling within the scope of the appended claims.

## Claims

1. An ink-repellent member comprising an underlying portion that contains a tantalum oxide, and has a hydrocarbon compound represented by the following formula (1) bonded to a surface thereof via a Ta-O-Si bond: 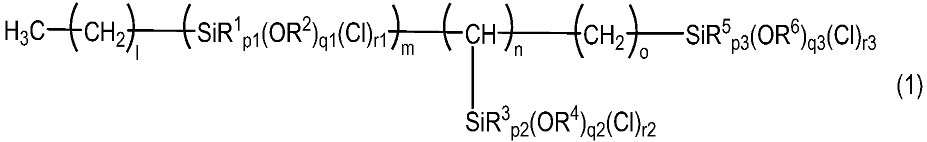 in the formula (1), R¹ to R⁶ are each independently selected from a methyl group and an ethyl group, "I" represents an integer of 0 or more, "m", "n", and "o" each independently represent an integer of from 0 to 2, p1, q1, and r1 each independently represent an integer of from 0 to 2, and p1+q1+r1=2 is satisfied, and p2 and p3 each independently represent an integer of from 0 to 2, and q2, r2, q3, and r3 each independently represent an integer of from 0 to 3, and p2+q2+r2=3 and p3+q3+r3=3 are satisfied.

2. The ink-repellent member according to claim 1, wherein the hydrocarbon compound has a molecular weight of 200 or more and 600 or less.

3. The ink-repellent member according to claim 1 or 2, wherein in the formula (1), p1, p2, and p3 each represent 0.

4. The ink-repellent member according to any one of claims 1 to 3, wherein "m", "n", and "o" in the formula (1) represent 1, 0, and 1, respectively.

5. The ink-repellent member according to any one of claims 1 to 3, wherein "m", "n", and "o" in the formula (1) represent 0, 1, and 1, respectively.

6. The ink-repellent member according to any one of claims 1 to 3, wherein "m", "n", and "o" in the formula (1) represent 0, 0, and 0, respectively.

7. The ink-repellent member according to any one of claims 1 to 3, wherein r1, r2, and r3 in the formula (1) represent 2, 3, and 3, respectively.

8. A method of producing an ink-repellent member including an underlying portion that contains a tantalum oxide, and has a hydrocarbon compound bonded to a surface thereof via a Ta-O-Si bond, the method comprising the following steps (1) and (2):
(1) subjecting the surface of the underlying portion to plasma treatment under an atmosphere having an oxygen concentration of 50 vol% or more; and
(2) applying a hydrocarbon compound represented by the following formula (1) onto the surface of the underlying portion subjected to the plasma treatment in the step (1), followed by dehydration condensation: 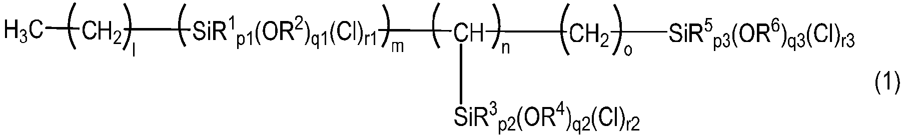
in the formula (1), R¹ to R⁶ are each independently selected from a methyl group and an ethyl group, "I" represents an integer of 0 or more, "m", "n", and "o" each independently represent an integer of from 0 to 2, p1, q1, and r1 each independently represent an integer of from 0 to 2, and p1+q1+r1=2 is satisfied, and p2 and p3 each independently represent an integer of from 0 to 2, and q2, r2, q3, and r3 each independently represent an integer of from 0 to 3, and p2+q2+r2=3 and p3+q3+r3=3 are satisfied.

9. An ink jet head comprising:
the ink-repellent member of any one of claims 1 to 7; and
an ejection orifice arranged on a side of the ink-repellent member on which the underlying portion is arranged, the ejection orifice being configured to eject a liquid.

10. A method of producing an article comprising ejecting a liquid through use of the ink jet head of claim 9,
wherein the liquid is an ink containing a functional material for forming a functional thin film or a functional element.
